# EUROPEAN PATENT SPECIFICATION

(11) **EP 2 045 987 B1**
(45) Date of publication and mention of the grant of the patent: **11.10.2017**
(21) Application number: 07816553.7
(22) Date of filing: 12.10.2007
(51) Int. Cl.: H04L 12/58, H04L 29/06

(54) **A NETWORK STORAGE SYSTEM AND A CONTROL METHOD FOR ACCESSING THE NETWORK STORAGE CONTENT**
NETZBASIERTES SPEICHERSYSTEM UND STEUERUNGSVERFAHREN FÜR DEN ZUGRIFF AUF DIE NETZSPEICHERINHALTE
SYSTÈME DE STOCKAGE RÉSEAU ET PROCÉDÉ DE COMMANDE POUR ACCÉDER AU CONTENU DE STOCKAGE RÉSEAU

(30) Priority: 13.10.2006 CN 200610140898
(43) Date of publication of application: 08.04.2009
(60) Divisional application: 17180742.3
(73) Proprietor: Huawei Technologies Co., Ltd., Longgang District Shenzhen, Guangdong 518129 (CN)
(72) Inventor: ZHANG, Liming Huawei Technologies Co., Ltd., Shenzhen Guangdong Province 518129 (CN)
(74) Representative: Pfenning, Meinig & Partner mbB
(86) International application number: PCT/CN2007/002939
(87) International publication number: WO 2008/046308

(56) References cited:
- EP-A1- 1 452 989
- EP-A1- 1 796 314
- EP-A2- 1 418 773
- WO-A1-2006/024230
- CN-A- 1 490 729
- CN-A- 1 744 557
- JP-A- 2005 250 582
- US-A- 5 931 947
- US-A1- 2002 013 815
- US-A1- 2002 194 295
- US-A1- 2003 224 760
- US-A1- 2004 139 178
- US-A1- 2004 205 178
- US-A1- 2005 192 966
- HECK J ET AL: "BLENDED IMS MESSAGING APPLICATIONS" BELL LABS TECHNICAL JOURNAL, WILEY, CA, US, vol. 4, no. 10, 1 January 2006 (2006-01-01), pages 39-52, XP001239284 ISSN: 1089-7089
- "Understanding file permissions on Unix: a brief tutorial", , 18 May 2006 (2006-05-18), XP55077620, Retrieved from the Internet: URL:http://www.dartmouth.edu/~rc/help/faq/ permissions.html [retrieved on 2013-09-04]

## Description

### Field of the Invention

The present invention relates to the technical field of communication, particularly to a network storage system and a method for access control of network stored content in message services.

### Background of the Invention

With the development of telecommunication services, more and more message services appear, such as Short Message Service (SMS), Multimedia Message Service (MMS), and Instant Message (IM). In practical applications, typical IMs include mobile IM, Internet-based IM, Push-to-talk over Cellular (PoC) service which can concurrently support voice and multimedia messages, and Email service frequently used in daily life. Therefore, the message services have been one of the important services in current telecommunication and internet services, and it can be predicted that the message services would be one of the key services in the future Next Generation Network (NGN)/ Next Generation Mobile Network (NGMN).

In consideration of the importance of the message services, how to continuously enhance the user experience of the message services, to simplify the implementing solutions of the message services and to protect the existing investment of operators is becoming a hot issue in the industry. Presently, the Open Mobile Alliance (OMA) standard organization has founded the Converged IP Messaging (CPM) workgroup, which is dedicated to the study and constitution of CPM related standards.

In the CPM solution, a technical solution of network storage is proposed, which is described as follows:

A user has a personal network storage space, which can store not only messages of the user, but also media files of the user.

The user can store various messages in the network storage space, including received messages, sent messages, messages saved as draft, and session messages such as the messages sent and received during a message chat between the user and his friend.

If the user stores media files in the network storage space, the user may store received media files in the network storage space and upload media files collected from other spaces to the network storage space. The media files may be audio files, graphics files, video files, etc. Usually, the CPM client of the user can not store many media files because of the restriction of its memory and processing speed. Therefore, the media files are stored in the network, which facilitates the management and utilization of the media files. The user can access his media content as long as the service can be accessed in any manner. In the management method, the network storage space can provide a Web management interface, so that the user can conveniently manage his network storage space via a device such as a PC. For example, the user uploads his favourite graphics files/audio files to the network server, deletes out-of-date or obsolete messages and media files, classifies disordered messages and media files.

The synchronization of key information between the CPM client of the user and the network storage system may be implemented. For example, the summary information of the messages and media files stored in the network storage space may be synchronized to the CPM client, so that the CPM client can clearly know the messages and media files stored in the network storage system.

The usual cases using the network storage are described as follows.
1. A user, via settings, instructs a CPM server to store new messages in a network storage space, and only a simple message indication is sent to the receiver. The receiver can decide whether to obtain the complete information of the message in accordance with the indication information of the message. This manner can reduce the traffic volume and avoid downloading the messages which the user is not interested in.
2. A user, through uploading some favourite audio files/graphics files/video files to his personal network storage space, can request the server to send a CPM message containing specific media files to his friend if the user desires to share the files with others, thereby the media sharing can be realized.

The above description is for typical application situations of the network storage. Besides the CPM service, the network storage is used in many other services. For example, the PoC Box in PoC service is a kind of network storage.

In the above technical solution of the prior art, the network storage may store not only the received and sent messages of the user, but also the media files collected by the user. However, only those users who belong to the network storage space can access the stored content and others can not perform an access. The access control of the network stored objects can not be supported efficiently. And the sharing of the media files can not be supported sufficiently.

In addition, a user can not access the network storage of another user, which results in the low system efficiency of media sharing. For example, the CPM server of sender B needs to embed the shared media in a message and send the message together with the media file, which apparently reduces the efficiency.

Furthermore, it is absent for the efficient management of the network stored objects in the prior art.

US application US 2003/224760 A1 (DAY JIA-DER [US]) discloses that a system receives a request for data from a mobile device. The system identifies filter criteria associated with the mobile device. The filter criteria is applied to a set of data to identify particular data elements that satisfy the filter criteria. The identified data elements are then transmitted to the mobile device.

US application US 2004/0139178 A1 (MENDEZ DANIEL J [US] ET AL) discloses that a global server is configured to identify and authenticate a user attempting to access it from a remote terminal, and is configured to provide access based on the client configuration either to the first set of workspace data stored on the client or to the second set of workspace data stored on the global server.

WO 2006/024230 discloses an instant messaging (IM) server giving the possibility to share IM messages among different users based on rules set by the users.

### Summary of the Invention

Embodiments of the present invention are to provide a network storage system and a method for access control of network stored content, so as to solve the problem of singleness and low-efficiency of the access solution of the network stored objects in the prior art.

network storage system (10), used in message services, wherein the system comprises:
a network storage unit (100), adapted to provide a network storage space for creating a shared folder requested by a first user;
an access rule storage unit (201), adapted to store an access rule; wherein, said access rule is set by the first user, and the access rule is permitting a second user to write in the shared folder; and
a network storage control unit (200), adapted to receive an upload request from the second user to upload a content to the shared folder;
wherein, the network storage control unit further comprises:
an access authority authentication control unit (202), connected with the access rule storage unit, and adapted to perform an authenticate control on the upload request in accordance with the access rule to permit the second user to add the content to the shared folder;
the network storage unit (100) further configured to store the content shared by the second user in the shared folder;
the network storage control unit (200), further configured to receive an obtain request for obtaining the content in the shared folder sent from the first user;
the network storage unit (100) further configured to provide the content to the first user.

A method for access control of network stored content, wherein the method is performed in a network storage system, wherein the method comprises:
receiving (1001), by the network storage system, an creating request for creating a shared folder sent by a first user;
storing (1001), by the network storage system, an access rule to permit a second user to write in the shared folder;
receiving(1003), by the network storage system, an upload request from the second user to upload a content to the shared folder;
performing (1004), by the network storage system, an authenticate control on the upload request in accordance with an access rule to permit the second user to add the content to the shared folder;
storing (1004), by the network storage system, the content shared by the second user in the shared folder;
receiving (1005), by the network storage system, an obtain request for obtaining the content in the shared folder sent by the first user;
providing (1006), by the network storage system, the content to the first user.

The solutions according to the embodiments of the present invention can realize the flexible sharing and utilization of the network stored objects, which improves the user experience and the processing efficiency of some service situations.

### Brief Description of the Drawings

Figure 1 is a schematic diagram illustrating the architecture of a network storage system according to an embodiment of the present invention;
Figure 2-Figure 4 are schematic diagrams illustrating the architectures of network storage systems in detail according to embodiments of the present invention;
Figure 5 is a schematic diagram illustrating the network storage system according to an embodiment of the present invention, which is implemented by using a CPM system in the embodiment of the present invention;
Figure 6 is a general flow chart illustrating an access control method of a network stored content according to an embodiment of the present invention;
Figure 7 is a specific flow chart illustrating a network storage control unit controlling a network storage access request according to an embodiment of the present invention;
Figure 8 is a flow chart of case 1 in the embodiment of the present invention;
Figure 9 is a flow chart of case 2 in the embodiment of the present invention; and
Figure 10 is a flow chart of case 3 in the embodiment of the present invention.

### Detailed Description of the Invention

The embodiments of the present invention are described in detail with reference to the attached drawings as follows.

A network storage system according to an embodiment of the present invention is used in message services, including SMS, MMS, IM, Mobile IM, Internet-based IM, Push-to-talk over Cellular (PoC) service supporting voice and multimedia messages concurrently, Email service, and CPM service.

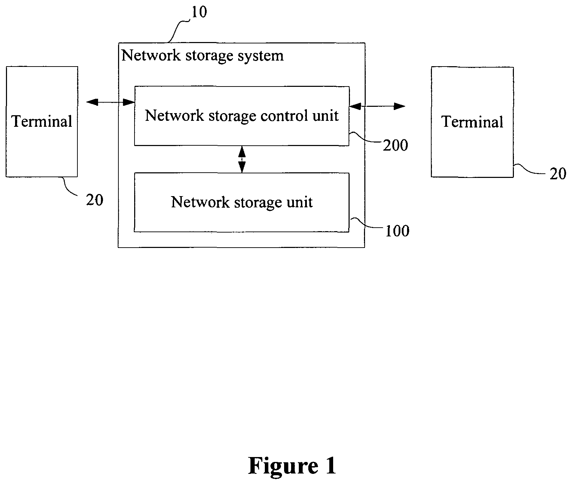

Figure 1 is a schematic diagram illustrating the architecture of the network storage system according to the embodiment of the present invention. Figure 1 illustrates the network storage system 10.

A network storage unit 100 is adapted to provide a storage space. The specific stored content includes the message object, the file object, the sub-folder object. The stored content is an access control object and also an object to be accessed.

A network storage control unit 200, connected with the network storage unit 100, contains an access rule set in it, and serves as the entity for network storage control at network side. Generally, the network storage control unit 200 may be a part of a CPM server, and alternatively may be separated from the CPM server in practical implementation.

In this embodiment, the network storage control unit 200 receives an access request from a terminal 20, and processes the access request in accordance with the set access rule.

The access request may be initiated by one of the following entities:

The owner of the network storage space, which is the entity owning a network storage space and may be implemented as a user or a client, such as a CPM user, a CPM client, and an application programme;

The visitor of the network storage space, which is the object accessing the network storage and may be implemented as a user or a client, such as a CPM user, a CPM client, and an application programme.

In the solution of an embodiment of the present invention, the owner of the network storage space and the visitor of the network storage space may be the same object or different objects. If the owner of the network storage space and the visitor of the network storage space are the same object, it indicates that a user accesses his own network stored object. If the owner of the network storage space and the visitor of the network storage space are different objects, it indicates that a user or an application programme accesses a network stored object not belonging to it.

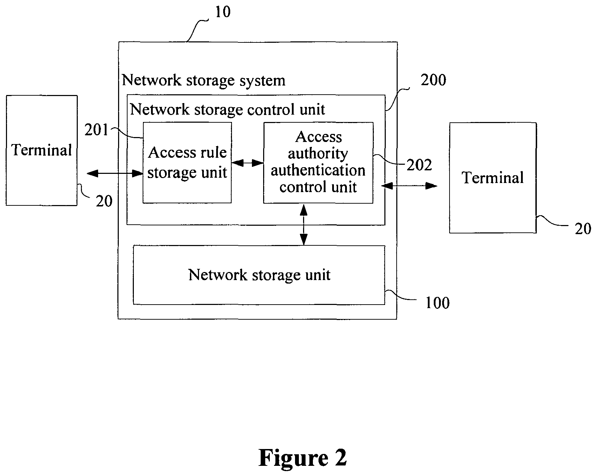

The network storage control unit may be further illustrated in detail as in Figure 2, including:
an access rule storage unit 201, adapted to store the access rule;
an access authority authentication control unit 202, connected with the access rule storage unit 201, adapted to perform an authentication control of the access request in accordance with the access rule.

In the above access rule storage unit 201 according to an embodiment of the present invention, one or the combination of the following access rules (public level) may be set.

Only the owner of the network storage space is permitted to perform an access (private), i.e., the network storage space is set as completely private and only the owner can access it. This level may be default in a specific solution.

All users can perform an access (public), i.e., the network storage space is public and all users can access it.

Specified users can perform an access (friend), i.e., specified users can access the network storage space. The users which are authorized to perform an access may be specified by a list or an access permission list given by a wildcard or a regular expression, or the access authority set via password which is used during an access.

Specified users can not perform an access, which is called black and white list setting, i.e., the black and white lists for access of an object are set, and users in the black list are prohibited from performing any access.

Some list examples are as follows:

List 1 (Specifying the users that are permitted to perform an access)

| Public level | Friend |
|---|---|
| Access permission list | UserA, UserB, UserC, Group D |

In list 1, only UserA, UserB, UserC and users in GroupD can access the specified stored object.

List 2 (Using wildcard and regular expression)

| Public Level | Friend |
|---|---|
| Access permission list | UserA, *.domain.com, ^[a-zA-Z0-9_]{6,}$@domain.com |

In list 2, besides UserA, any user whose username is ended with ".domain.com" and any user whose username is a string consisting of more than six characters of letters, numbers or underlines in "domain.com" can access the specified stored object. (The ^[a-zA-Z0-9_]{6,} is a regular expression, indicating that a string consisting of more than six characters of letters, numbers, or underlines.)

List 3 (Black and white lists)

| | |
|---|---|
| Black List | User A , User B, User C, *@domain.com |
| White List | User D, Group E, *@mobile.com |

In list 3, the users in the black list can not perform an access while the users in the white list can perform an access.

In the practical implementation, the above manners may be combined to use, such as setting not only the public level but also the black and while lists.

In the access rule storage unit 201, operations on a stored object may be set as follows according to an embodiment of the present invention.

The operation definitions of a stored object in the storage space serve as the access rule (Read and Write authority restriction):
A Read-only operation can be performed on the stored object: the visitor can perform a Read operation on the accessed network stored object, i.e. a Read-only operation but no Modify operation can be performed on this object;
A Write operation can be performed on the stored object, i.e., the visitor can perform a Write operation on the accessed stored object;
A Delete operation can be performed on the stored object, i.e., the visitor can perform a Delete operation on the accessed stored object;
A Modify operation can be performed on the stored object, i.e., the visitor can perform a Modify operation on the accessed network stored object.

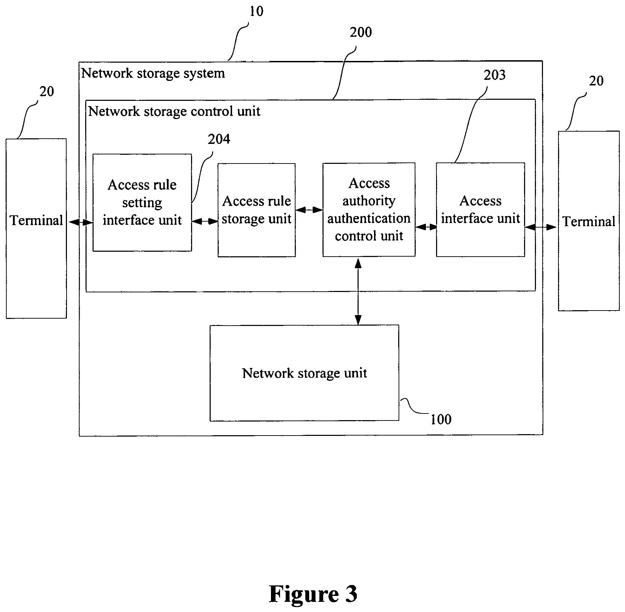

As shown in Figure 3, the network storage control unit further includes:
An access interface unit 203, connected with the access authority authentication control unit 202, and adapted to receive the access request from the terminal 20 and send the access request to the access authority authentication control unit 202; the access to the specific network stored object can be requested via the interface, such as requesting to query, delete or add a specific stored object;
An access rule setting interface unit 204, connected with the access rule storage unit 201, and adapted to provide an access rule setting interface, via which the owner of the network storage space or an authorized user can set the access rule for the network stored object.

The above access rule may be set via a Web interface or be set by the terminal via a command.

In the above solution, the access interface unit 203 and the access rule setting interface unit 204 may be configured to integrate with each other, so that the network storage control unit can receive the access request and the access rule setting command via a universal interface.

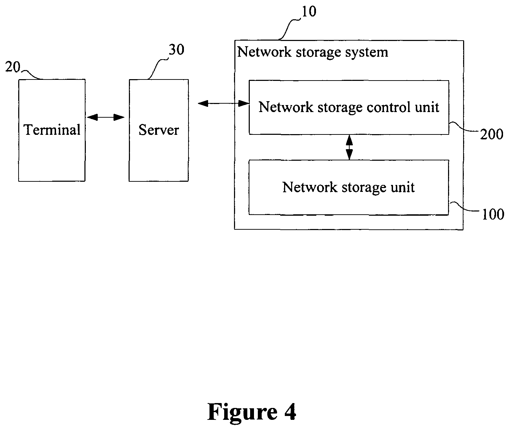

As illustrated in Figure 4, a server 30 may be set between the network storage system 10 and the terminal 20, so as to manage the terminal.

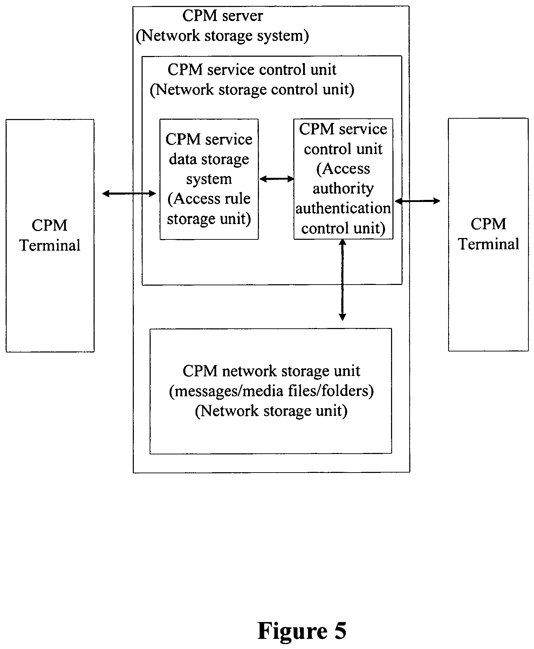

Figure 5 is a schematic diagram illustrating the architecture of the system of an embodiment of the present invention applied in the CPM service. As illustrated in Figure 5, the network storage system may be implemented on a CPM server.

Correspondingly, the network storage system according to the embodiment of the present invention is a CPM server.

The network storage unit is a CPM network storage unit, adapted to store Converged IP Messaging (CPM) service related messages, and/or media files, and/or folders storing these objects.

The network storage control unit is a CPM service control unit.

The access rule storage unit is a CPM service data storage system.

If the embodiment of the present invention is applied in other message services such as SMS, MMS, IM, Mobile IM, Internet-based IM, PoC service, and Email service, the process is similar with that described above.

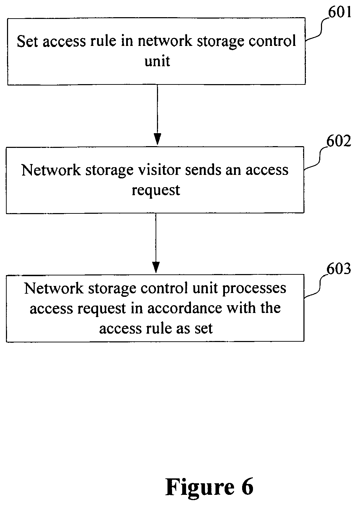

Figure 6 is a general flow chart illustrating an access control method of a network stored content according to this embodiment. As illustrated in Figure 6, the method includes the processes as follows.

Process 601: an access rule is set in the network storage control unit;

The owner of the network storage space or an authorized user sets the access rule for the network stored object in the network storage control unit via the access rule setting interface unit.

Process 602: A visitor sends an access request.

The visitor, in accordance with its personal requirements, performs an access operation on the specific network stored object via an access interface unit, such as requesting to query, delete or add a specific stored object.

In this process, the user initiating the access request may be the owner of the network storage space or a user that is not the owner of the network storage space.

Process 603: The network storage control unit processes the access request in accordance with the access rule as set.

The network storage control unit processes the access request from the network storage visitor in accordance with the access rule set by the user, such as performing authentication and control; if the authentication is passed, it is permitted to perform a corresponding operation or the requested stored object is sent to the visitor, such as query, deleting, and adding; if the authentication is not passed, the corresponding operation is rejected.

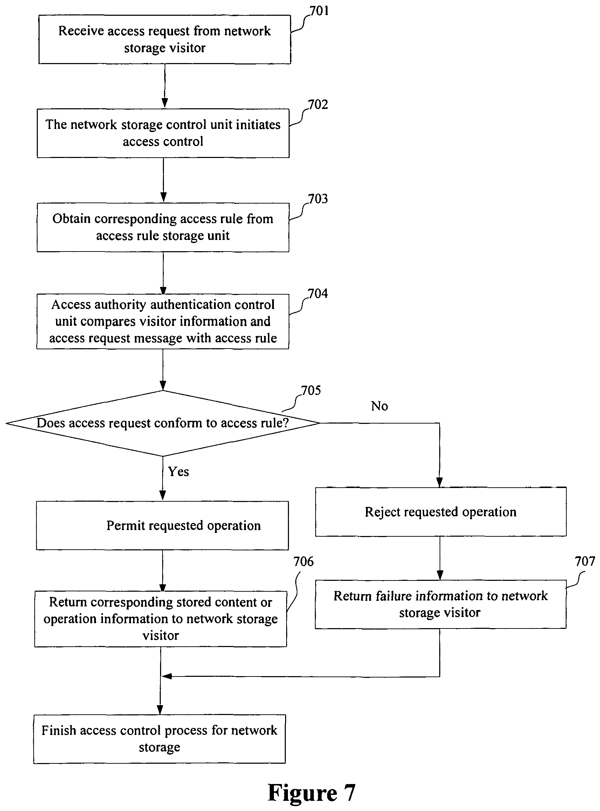

Figure 7 is a specific flow chart illustrating the network storage control unit controlling a network storage access request according to an embodiment of the present invention, which mainly includes the processes as follows.
Process 701: The network storage control unit receives an access request from the visitor of a network stored object.
Process 702: The network storage control unit initiates an access control procedure.
Process 703: The network storage control unit obtains a corresponding access rule from the access rule storage unit.
Process 704: The access authority authentication control unit compares the visitor information and the access request message with the access rule.
Process 705: It is determined whether the information on the access request initiator and the access request conform to the access rule as set; if yes, the procedure goes to process 706; otherwise, the procedure goes to process 707.
Process 706: The corresponding network stored content, e.g. the message/media information, is returned to the network storage visitor, or operations such as deleting and modifying are performed.
Process 707: Failure information is returned to the network storage visitor.

Several specific examples are described as follows.

### Example 1

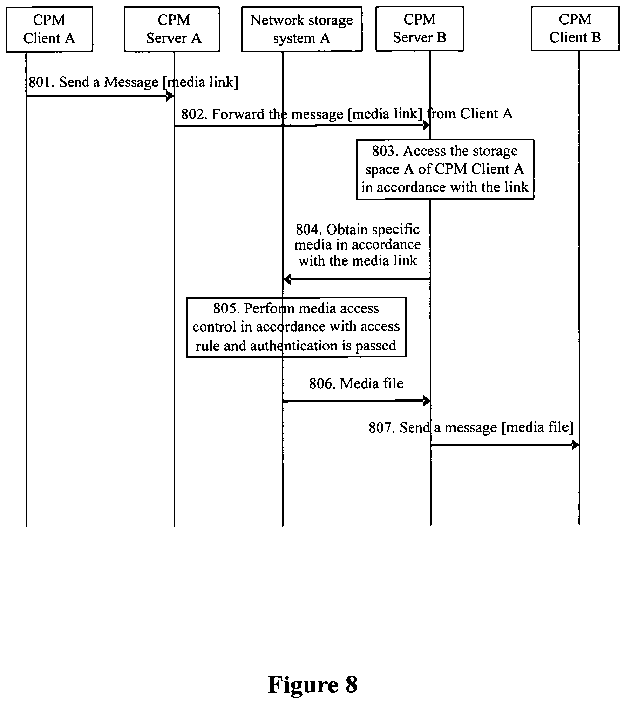

Figure 8 is a schematic flow chart of example 1, in which a user A sends a message containing a media link via a CPM Client A, and the CPM Server of a user B accesses the shared media content of the user A via the link and forwards the content to the user B. The procedure includes the processes as follows:
Process 801: The CPM Client A sends a message to the CPM Server A, the message carrying a media link pointing to a media file in the network storage system A of the user A.
Process 802: The CPM Server A sends the message carrying the media link to a CPM Server B.
Process 803: The CPM Server B shall replace the media link in the message with specific media in accordance with the local policy (such as replace the media link with specific media) of the server.
Process 804: The CPM Server B sends an access request (media obtaining request) to the network storage system A.
Process 805: The network storage system A determines whether to permit the obtaining of the media content in accordance with the access rule (the determined result is to permit the obtaining in this example).
Process 806: The network storage system A returns the specific media to the CPM Server B.
Process 807: The CPM Server B embeds the media obtained from the network storage system in a message which will be sent to the CPM Client B, and send the message to the CPM Client B.

### Example 2

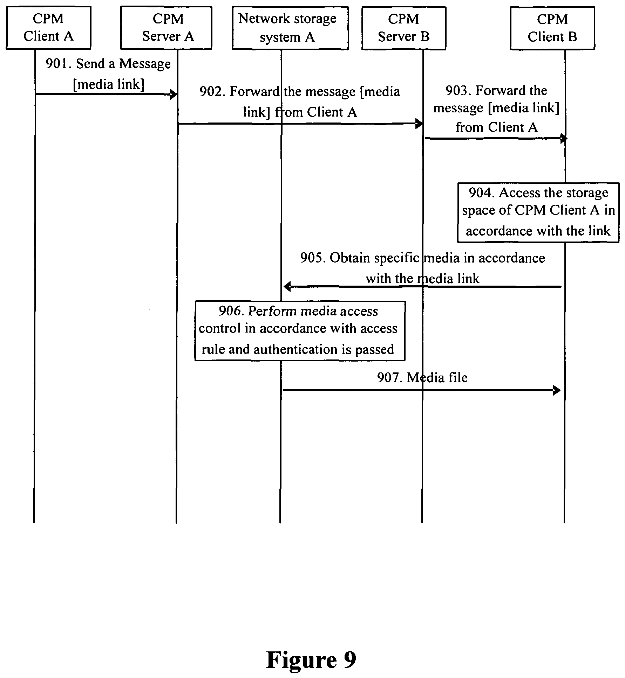

As illustrated in Figure 9, a user A sends a message containing a media link via a CPM Client A, and a CPM Client B of a user B accesses the shared content of the CPM Client A via the link. The procedure includes the processes as follows:
Process 901: The CPM Client A sends to the CPM Server A a message request containing a media link pointing to a media file in the network storage system A of the user A.
Process 902: The CPM Server A sends the message request carrying the media link to the CPM Server B.
Process 903: The CPM Server B sends the message request carrying the media link to the CPM Client B.
Process 904: The CPM Client B requests of the network storage system A a specific media in accordance with the media link in the message.
Process 905: The CPM Client B sends a media obtaining request to the network storage system A.
Process 906: The network storage A determines whether to permit the obtaining of the media content in accordance with the access rule (the determined result is to permit the obtaining in this example).
Process 907: the network storage system A returns the specific media to the CPM Client B.

### Example 3

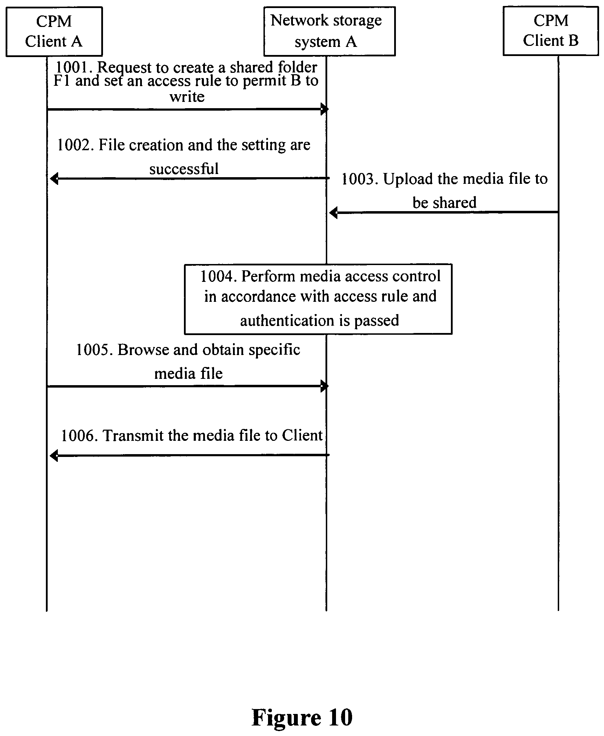

In Figure 10, a user A accesses the media folder of a user B via a CPM Client A to share the media content of the user B. The procedure includes the processes as follows:
Process 1001: The CPM Client A requests the network storage system A to create a shared folder, and sets an access rule to permit the user B to write.
Process 1002: The network storage system A returns a message indicating the folder creation success to the CPM Client A.
Process 1003: The CPM Client B requests to upload the media which is desired to be shared with the user A to the network storage system A.
Process 1004: The network storage system A determines whether to permit the CPM Client B to add the media content in accordance with the access rule (the determined result is to permit the media adding in this example); and the CPM Client B adds in the network storage system A the desired media for the user B to be shared successfully.
Process 1005: The CPM Client A requests to obtain the media in the network storage system A.
Process 1006: The network storage system A returns the specific media to the CPM Client A.

It should be understood from the above description of the embodiments of the present invention that, in the solutions of the embodiments of the present invention, the owner of a network storage system may set the access authority for one of his stored objects, and set the access control authority in the form of black and white lists, so that authorized users and applications may access a stored object, to implement the sharing. In addition, in the embodiments of the present invention, the user who is not the owner of the network storage space may send only the link of the media and summary information, so that the CPM server of the receiver or the receiver terminal obtains the media from the network storage space of user B as required, thereby the efficiency is improved.

In the embodiments of the present invention, the network storage unit and the network storage control unit are not necessarily separate but integrated. The network storage control unit and the network storage unit are not necessarily directly connected but communicated with each other with the same function as in the case of direct connection. The access rule may be set in the network storage control unit or in another network entity.

Apparently, those skilled in the art can make various modifications and variations of the present invention without departing from the scope of the present invention. Therefore, if these modifications and variations of the present invention are fallen in the scope of the claims of the present invention, the present invention intends to encompass these modifications and variations.

## Claims

1. A network storage system (10), used in message services, wherein the system comprises:
a network storage unit (100), adapted to provide a network storage space for creating a shared folder requested by a first user;
an access rule storage unit (201), adapted to store an access rule; wherein, said access rule is set by the first user, and the access rule is permitting a second user to write in the shared folder; and
a network storage control unit (200), adapted to receive an upload request from the second user to upload a content to the shared folder;
wherein, the network storage control unit further comprises:
an access authority authentication control unit (202), connected with the access rule storage unit, and adapted to perform an authenticate control on the upload request in accordance with the access rule to permit the second user to add the content to the shared folder;
the network storage unit (100) further configured to store the content shared by the sencond user in the shared folder;
the network storage control unit (200), further configured to receive an obtain request for obtaining the content in the shared folder sent from the first user;
the network storage unit (100) further configured to provide the content to the first user.

2. The system according to claim 1, wherein the access rule storage unit is arranged in the network storage control unit.

3. The system according to claim 1, wherein the network storage control unit further comprises:
an access rule setting interface unit (204), connected with the access rule storage unit (201), and adapted to provide an access rule setting interface for users.

4. The system according to claim 1, wherein the network storage control unit further comprises:
an access interface unit (203), connected with the access authority authentication control unit (202), and adapted to receive the upload request from the terminal (20) and send the upload request to the access authority authentication control unit (202).

5. The system according to any one of claims 1 to 4, wherein:
the network storage unit is a Converged IP Messaging, CPM network storage unit;
the network storage control unit is a CPM service control unit;
the network storage unit is adapted to store Converged IP Messaging, CPM, service related messages, and/or media files, and/or folders storing the object.

6. A method for access control of network stored content, wherein the method is performed in a network storage system, wherein the method comprises:
receiving (1001), by the network storage system, an creating request for creating a shared folder sent by a first user;
storing (1001), by the network storage system, an access rule to permit a second user to write in the shared folder;
receiving(1003), by the network storage system, an upload request from the second user to upload a content to the shared folder;
performing (1004), by the network storage system, an authenticate control on the upload request in accordance with the access rule to permit the second user to add the content to the shared folder;
storing (1004), by the network storage system, the content shared by the sencond user in the shared folder;
receiving (1005), by the network storage system, an obtain request for obtaining the content in the shared folder sent by the first user;
providing (1006), by the network storage system, the content to the first user.

7. The method according to claim 6, wherein the access rule further comprises any one or a combination of the following items:
accessible only by the owner of a network storage space;Read-only operation available to network stored content;
Write operation available to network stored content;
Delete operation available to network stored content; and
Modify operation available to network stored content.

8. The method according to claim 6, wherein the access request comprises any one or a combination of the following items:
Read request;
Write request;
Delete request; and
Modify request.

9. The method according to claim 6, wherein the process of performing an authenticate control on the upload request in accordance with a access rule further comprises:
obtaining, by the network storage system, the access rule;
comparing the information of the second user sending the upload rquest and the upload request message with the access rule; and
processing the upload request in accordance with the compared result.

10. The method according to claim 9, wherein the process of processing the upload request in accordance with the compared result further comprises:
permitting the upload request if the informaiton on the user and the request message are consistent with the access rule;
rejecting the upload request if the informaiton on the user and the request message are not consistent with the access rule.

11. The method according to claim 9, the process of performing an authenticate control on the upload request in accordance with a access rule further comprises: the process of authenticating a password provided by the second user.

12. The method according to any one of claims 6 to 11, wherein the access rule is set by one of the following items:
setting via a Web interface; and
setting via a command by a terminal.

## Patentansprüche

1. Netzspeichersystem (10), das bei Nachrichtendiensten verwendet wird, wobei das System Folgendes umfasst:
eine Netzspeichereinheit (100), die dazu ausgelegt ist, einen Netzspeicherplatz zum Erzeugen eines gemeinsamen Verzeichnisses, das durch einen ersten Benutzer angefordert wird, bereitzustellen;
eine Zugriffsregelspeichereinheit (201), die dazu ausgelegt ist, eine Zugriffsregel zu speichern; wobei die Zugriffsregel durch den ersten Benutzer festgelegt wird und die Zugriffsregel einem zweiten Benutzer erlaubt, in das gemeinsame Verzeichnis zu schreiben; und
eine Netzspeichersteuereinheit (200), die dazu ausgelegt ist, eine Hochladeanfrage vom zweiten Benutzer zum Hochladen eines Inhalts zum gemeinsamen Verzeichnis zu empfangen;
wobei die Netzspeichersteuereinheit ferner Folgendes umfasst:
eine Zugriffsautoritätsauthentifizierungs-Prüfeinheit (202), die mit der Zugriffsregelspeichereinheit verbunden und dazu ausgelegt ist, eine Authentifizierungsprüfung an der Hochladeanfrage gemäß der Zugriffsregel durchzuführen, so dass dem zweiten Benutzer erlaubt wird, den Inhalt zum gemeinsamen Verzeichnis hinzuzufügen;
wobei die Netzspeichereinheit (100) ferner dazu konfiguriert ist, den Inhalt, der durch den zweiten Benutzer im gemeinsamen Verzeichnis geteilt wird, zu speichern;
wobei die Netzspeichersteuereinheit (200) ferner dazu konfiguriert ist, eine vom ersten Benutzer gesendete Erhalteanfrage zum Erhalten des Inhalts im gemeinsamen Verzeichnis zu empfangen;
wobei die Netzspeichereinheit (100) ferner dazu konfiguriert ist, den Inhalt zum ersten Benutzer bereitzustellen.

2. System nach Anspruch 1, wobei die Zugriffsregelspeichereinheit in der Netzspeichersteuereinheit angeordnet ist.

3. System nach Anspruch 1, wobei die Netzspeichersteuereinheit ferner Folgendes umfasst:
eine Zugriffsregelfestlegungs-Schnittstelleneinheit (204), die mit der Zugriffsregelspeichereinheit (201) verbunden und dazu ausgelegt ist, eine Zugriffsregelfestlegungs-Schnittstelle für Benutzer bereitzustellen.

4. System nach Anspruch 1, wobei die Netzspeichersteuereinheit ferner Folgendes umfasst:
eine Zugriffsschnittstelleneinheit (203), die mit der Zugriffsautoritätsauthentifizierungs-Prüfeinheit (202) verbunden und dazu ausgelegt ist, die Hochladeanfrage vom Endgerät (20) zu empfangen und die Hochladeanfrage zur Zugriffsautoritätsauthentifizierungs-Prüfeinheit (202) zu senden.

5. System nach einem der Ansprüche 1 bis 4, wobei:
die Netzspeichereinheit eine Netzspeichereinheit für eine konvergierte IP-Nachrichtenübermittlung bzw. CPM-Netzspeichereinheit ist;
die Netzspeichersteuereinheit eine CPM-Dienststeuereinheit ist;
die Netzspeichereinheit dazu ausgelegt ist, Nachrichten, die einen konvergierten IP-Nachrichtenübermittlungsdienst bzw. CPM-Dienst betreffen, und/oder Mediendateien und/oder Verzeichnisse, die das Objekt speichern, zu speichern.

6. Verfahren für eine Zugriffssteuerung von netzgespeichertem Inhalt, wobei das Verfahren in einem Netzspeichersystem durchgeführt wird und es Folgendes umfasst:
Empfangen (1001), durch das Netzspeichersystem, einer durch einen ersten Benutzer gesendeten Erzeugungsanfrage zum Erzeugen eines gemeinsamen Verzeichnisses;
Speichern (1001), durch das Netzspeichersystem, einer Zugriffsregel, so dass einem zweiten Benutzer erlaubt wird, in das gemeinsame Verzeichnis zu schreiben;
Empfangen (1003), durch das Netzspeichersystem, einer Hochladeanfrage vom zweiten Benutzer zum Hochladen eines Inhalts zum gemeinsamen Verzeichnis;
Durchführen (1004), durch das Netzspeichersystem, einer Authentifizierungsprüfung an der Hochladeanfrage gemäß der Zugriffsregel, so dass dem zweiten Benutzer erlaubt wird, den Inhalt zum gemeinsamen Verzeichnis hinzuzufügen;
Speichern (1004), durch das Netzspeichersystem, des Inhalts, der durch den zweiten Benutzer im gemeinsamen Verzeichnis geteilt wird;
Empfangen (1005), durch das Netzspeichersystem, einer durch den ersten Benutzer gesendeten Erhalteanfrage zum Erhalten des Inhalts im gemeinsamen Verzeichnis;
Bereitstellen (1006), durch das Netzspeichersystem, des Inhalts zum ersten Benutzer.

7. Verfahren nach Anspruch 6, wobei die Zugriffsregel ferner einen beliebigen oder eine Kombination der folgenden Punkte umfasst:
nur durch den Eigentümer eines Netzspeicherplatzes zugreifbar; Nur-Lese-Operation für netzgespeicherten Inhalt verfügbar;
Schreiboperation für netzgespeicherten Inhalt verfügbar;
Löschoperation für netzgespeicherten Inhalt verfügbar und
Änderungsoperation für netzgespeicherten Inhalt verfügbar.

8. Verfahren nach Anspruch 6, wobei die Zugriffsanfrage einen beliebigen oder eine Kombination der folgenden Punkte umfasst:
Leseanfrage;
Schreibanfrage;
Löschanfrage und
Änderungsanfrage.

9. Verfahren nach Anspruch 6, wobei der Prozess des Durchführens einer Authentifizierungsprüfung an der Hochladeanfrage gemäß einer Zugriffsregel ferner Folgendes umfasst:
Erhalten, durch das Netzspeichersystem, der Zugriffsregel;
Vergleichen der Informationen des zweiten Benutzers, der die Hochladeanfrage sendet, und der Hochladeanfragenachricht mit der Zugriffsregel und
Verarbeiten der Hochladeanfrage gemäß dem Vergleichsergebnis.

10. Verfahren nach Anspruch 9, wobei der Prozess des Verarbeitens der Hochladeanfrage gemäß dem Vergleichsergebnis ferner Folgendes umfasst:
Erlauben der Hochladeanfrage, falls die Informationen über den Benutzer und die Anfragenachricht mit der Zugriffsregel vereinbar sind;
Ablehnen der Hochladeanfrage, falls die Informationen über den Benutzer und die Anfragenachricht nicht mit der Zugriffsregel vereinbar sind.

11. Verfahren nach Anspruch 9, wobei der Prozess des Durchführens einer Authentifizierungsprüfung an der Hochladeanfrage gemäß einer Zugriffsregel ferner den Prozess des Authentifizierens eines durch den zweiten Benutzer bereitgestellten Passwortes umfasst.

12. Verfahren nach einem der Ansprüche 6 bis 11, wobei die Zugriffsregel durch einen der folgenden Punkte festgelegt wird:
Festlegen über eine Web-Schnittstelle und
Festlegen über einen Befehl durch ein Endgerät.

## Revendications

1. Système de stockage réseau (10), utilisé dans des services de messagerie, où le système comprend :
une unité de stockage réseau (100), adaptée pour fournir un espace de stockage réseau pour créer un dossier partagé demandé par un premier utilisateur ;
une unité de stockage de règle d'accès (201), adaptée pour stocker une règle d'accès ; où ladite règle d'accès est définie par le premier utilisateur, et la règle d'accès permet à un second utilisateur d'écrire dans le dossier partagé ; et
une unité de contrôle de stockage réseau (200), adaptée pour recevoir une demande de téléchargement depuis le second utilisateur pour télécharger un contenu vers le dossier partagé ;
où l'unité de contrôle de stockage réseau comprend en outre :
une unité de contrôle d'authentification d'autorisation d'accès (202), connectée à l'unité de stockage de règle d'accès, et adaptée pour effectuer un contrôle d'authentification sur la demande de téléchargement conformément à la règle d'accès pour permettre au second utilisateur d'ajouter le contenu dans le dossier partagé ;
l'unité de stockage réseau (100), en outre configurée pour stocker le contenu partagé par le second utilisateur dans le dossier partagé ;
l'unité de contrôle de stockage réseau (200), en outre configurée pour recevoir une demande d'obtention pour obtenir le contenu dans le dossier partagé envoyée par le premier utilisateur ;
l'unité de stockage réseau (100), en outre configurée pour fournir le contenu au premier utilisateur.

2. Système selon la revendication 1, dans lequel l'unité de stockage de règle d'accès est disposée dans l'unité de contrôle de stockage réseau.

3. Système selon la revendication 1, dans lequel l'unité de contrôle de stockage réseau comprend en outre :
une unité d'interface de définition de règle d'accès (204), connectée à l'unité de stockage de règle d'accès (201), et adaptée pour fournir une interface de définition de règle d'accès aux utilisateurs.

4. Système selon la revendication 1, dans lequel l'unité de contrôle de stockage réseau comprend en outre :
une unité d'interface d'accès (203), connectée à l'unité de contrôle d'authentification d'autorisation d'accès (202), et adaptée pour recevoir la demande de téléchargement depuis le terminal (20) et envoyer la demande de téléchargement à l'unité de contrôle d'authentification d'autorisation d'accès (202).

5. Système selon l'une quelconque des revendications 1 à 4, dans lequel :
l'unité de stockage réseau est une unité de stockage réseau de messagerie IP unifiée, CPM ;
l'unité de contrôle de stockage réseau est une unité de contrôle de service CPM ;
l'unité de stockage réseau est adaptée pour stocker des messages de liés au service de messagerie IP unifiée, CPM, et/ou des fichiers multimédia et/ou des dossiers stockant l'objet.

6. Procédé de contrôle d'accès à un contenu stocké sur un réseau, où le procédé est exécuté dans un système de stockage réseau, où le procédé comprend les étapes suivantes :
recevoir (1001), par le système de stockage réseau, une demande de création pour créer un dossier partagé envoyée par un premier utilisateur ;
stocker (1001), par le système de stockage réseau, une règle d'accès pour permettre à un second utilisateur d'écrire dans le dossier partagé ;
recevoir (1003), par le système de stockage réseau, une demande de téléchargement depuis le second utilisateur pour télécharger un contenu dans le dossier partagé ;
exécuter (1004), par le système de stockage réseau, un contrôle d'authentification sur la demande de téléchargement conformément à la règle d'accès pour permettre au second utilisateur d'ajouter le contenu dans le dossier partagé ;
stocker (1004), par le système de stockage réseau, le contenu partagé par le second utilisateur dans le dossier partagé ;
recevoir (1005), par le système de stockage réseau, une demande d'obtention pour obtenir le contenu dans le dossier partagé envoyée par le premier utilisateur ;
fournir (1006), par le système de stockage réseau, le contenu au premier utilisateur.

7. Procédé selon la revendication 6, dans lequel la règle d'accès comprend en outre l'une quelconque ou une combinaison des fonctionnalités suivantes :
accessible uniquement par le propriétaire d'un espace de stockage réseau ;
opération en lecture seule disponible pour le contenu stocké sur le réseau ;
opération d'écriture disponible pour le contenu stocké sur le réseau ;
opération de suppression disponible pour le contenu stocké sur le réseau ; et
opération de modification disponible pour le contenu stocké sur le réseau.

8. Procédé selon la revendication 6, dans lequel la demande d'accès comprend l'une quelconque ou une combinaison des opérations suivantes :
demande de lecture ;
demande d'écriture ;
demande de suppression ; et
demande de modification.

9. Procédé selon la revendication 6, dans lequel le processus d'exécution d'un contrôle d'authentification sur la demande de téléchargement conformément à une règle d'accès comprend en outre les étapes suivantes :
obtenir, par le système de stockage réseau, la règle d'accès ;
comparer les informations du second utilisateur envoyant la demande de téléchargement et le message de demande de téléchargement avec la règle d'accès ; et
traiter la demande de téléchargement conformément au résultat comparé.

10. Procédé selon la revendication 9, dans lequel le processus de traitement de la demande de téléchargement conformément au résultat de comparaison comprend en outre les étapes suivantes :
permettre la demande de téléchargement si les informations concernant l'utilisateur et le message de demande sont conformes à la règle d'accès ;
rejeter la demande de téléchargement si les informations concernant l'utilisateur et le message de demande ne sont pas conformes à la règle d'accès.

11. Procédé selon la revendication 9, le processus d'exécution d'un contrôle d'authentification sur la demande de téléchargement conformément à une règle d'accès comprend en outre : le processus d'authentification d'un mot de passe fourni par le second utilisateur.

12. Procédé selon l'une quelconque des revendications 6 à 11, dans lequel la règle d'accès est définie par l'une des fonctionnalités suivantes :
réglage par l'intermédiaire d'une interface Web ; et
réglage par l'intermédiaire d'une commande émise par un terminal.
